(19) **Europäisches Patentamt / European Patent Office / Office européen des brevets**

(11) **EP 1 363 353 B1**

(12) **FASCICULE DE BREVET EUROPEEN**

(45) Date de publication et mention
de la délivrance du brevet:
**13.06.2007 Bulletin 2007/24**

(51) Int Cl.:
*H01Q 1/32* (2006.01)    *B60R 25/00* (2006.01)
*G07C 9/00* (2006.01)

(21) Numéro de dépôt: **03291038.2**

(22) Date de dépôt: **29.04.2003**

(54) **Véhicule muni d'un dispositif de transmission de signaux**

Fahrzeug mit einer Vorrichtung zur Übertragung von Signalen

Vehicle provided with a device for the transmission of signals

(84) Etats contractants désignés:
**AT BE BG CH CY CZ DE DK EE ES FI FR GB GR HU IE IT LI LU MC NL PT RO SE SI SK TR**

(30) Priorité: **14.05.2002 FR 0205897**

(43) Date de publication de la demande:
**19.11.2003 Bulletin 2003/47**

(73) Titulaire: **Delphi Technologies, Inc.
Troy, MI 48007 (US)**

(72) Inventeurs:
• **Suck, Jochen
51674 Wiehl (DE)**
• **Lelandais, Guy
91190 Gif-sur-Yvette (FR)**

(74) Mandataire: **Abello, Michel
Cabinet PEUSCET
161, rue de Courcelles
75017 Paris (FR)**

(56) Documents cités:
**EP-A- 0 875 851**    **EP-A- 1 184 236**
**WO-A-97/16331**    **FR-A- 2 753 570**
**FR-A- 2 786 030**    **FR-A- 2 808 125**
**US-A- 3 560 983**    **US-A- 4 873 530**
**US-A1- 2002 027 498**

## Description

La présente invention concerne les véhicules, notamment les véhicules automobiles, du type comportant un espace intérieur délimité par des parois et un dispositif de transmission de signaux embarqué destiné à communiquer avec un dispositif récepteur portatif pour mettre en oeuvre un procédé de commande à distance.

Au sens de l'invention, l'espace intérieur du véhicule inclut tout espace délimité par des parois sur au moins certains de ses côtés, cet espace pouvant être habitable, comme l'habitacle, ou non habitable, comme le coffre. L'espace intérieur du véhicule peut être entièrement clos par des parois, incluant une paroi de plancher, une paroi de plafond et des parois latérales ou, a contrario, être ouvert sur un ou plusieurs côtés, par exemple sur le coté supérieur dans le cas de l'habitacle d'un véhicule cabriolet. L'invention s'applique aussi aux véhicules dits « monospace » dans lesquels le coffre et l'espace habitable ne sont pas séparés.

On connaît des véhicules du type ci-dessus, qui sont munis d'un dispositif de transmission de signaux appartenant à un système de commande mains libres. Dans ce cas, l'expression « mains libres » signifie qu'il n'est pas nécessaire d'utiliser une clé mécanique pour effectuer certaines opérations. Par exemple, le système de commande mains libres permet de mettre en oeuvre un procédé d'accès mains libres pour commander à distance un organe de condamnation de l'accès au véhicule, par exemple une serrure de portière ou de haillon de coffre, ou encore un procédé de démarrage mains libres pour commander à distance un organe de démarrage du véhicule.

Pour un véhicule muni d'un système de commande mains libres, le dispositif récepteur portatif est un identifiant électronique, qui est un émetteur-récepteur destiné à être porté par un utilisateur autorisé du véhicule et qui remplace la clé mécanique. Une unité centrale de commande embarquée sur le véhicule établit, par l'intermédiaire du dispositif de transmission de signaux, un dialogue bidirectionnel à distance avec le dispositif récepteur portatif pour authentifier l'utilisateur et commander des moyens de condamnation/décondamnation des serrures des ouvrants, respectivement des moyens de mise en marche du moteur, lorsque l'utilisateur a été reconnu authentique. Par exemple, l'initialisation du protocole de communication peut être activée en touchant ou en actionnant la poignée extérieure de porte, ou encore par détection de la présence de la main au voisinage de la poignée extérieure de porte, pour l'accès mains libres ; ou en appuyant sur un bouton de démarrage sur le tableau de bord, pour le démarrage mains libres. En variante, cette initialisation peut être déclenchée en actionnant un bouton de commande du dispositif récepteur portatif.

Pour la liaison depuis l'unité centrale de commande vers le dispositif récepteur portatif, il est courant d'utiliser un champ magnétique modulé, avec une fréquence de porteuse située par exemple entre 10 kHz et 20 kHz, ou aux environs de 125 kHz, aux environs de 6 MHz ou encore aux environs de 13 MHz, en fonction des bandes autorisées.

Dans un tel véhicule, pour des raisons de sécurité, il est nécessaire de tenir compte de la position du dispositif récepteur portatif lors de différentes étapes du procédé de commande. Par exemple, il est préférable de n'autoriser le démarrage du véhicule que si le dispositif récepteur portatif se trouve à l'intérieur du véhicule et, a contrario, de n'autoriser la condamnation des portières, respectivement du haillon de coffre, que si le dispositif récepteur portatif se trouve à l'extérieur de l'habitacle du véhicule, respectivement de son coffre. Quant à la décondamnation des serrures, celle-ci ne doit être autorisée que lorsque l'utilisateur est assez près du véhicule pour être conscient du déroulement des opérations commandées, afin d'éviter une mise en oeuvre accidentelle ou frauduleuse du procédé de commande.

On connaît un véhicule équipé d'un système de commande mains libres utilisant une fréquence de 125kHz pour la liaison depuis l'unité centrale de commande vers le dispositif récepteur portatif. Mais dans ce véhicule, pas moins de cinq antennes extérieures et quatre antennes intérieures sont utilisées pour déterminer si le dispositif récepteur portatif est à l'intérieur ou à l'extérieur du véhicule, car chacune d'elles présente une zone de couverture assez restreinte et dont la géométrie est mal contrôlée. Une antenne magnétique est typiquement constituée de plusieurs spires de câble conducteur, avec éventuellement un noyau de ferrite pour améliorer l'efficacité. Une telle antenne présente une certaine impédance inductive, ce qui impose l'utilisation d'un circuit adapté pour obtenir un transfert d'énergie satisfaisant depuis la source d'énergie, et des moyens d'atténuation pour obtenir une reconnaissance des données satisfaisante. Tout cet équipement accroît le coût du véhicule.

US-A-4873530 décrit un véhicule conforme au préambule de la revendication 1.

La présente invention vise à fournir un véhicule résolvant au moins certains des inconvénients précités. En particulier, l'invention vise à fournir un véhicule permettant de tenir compte de la position du dispositif récepteur portatif dans des zones de géométrie quelconque, avec un dispositif de transmission de signaux aussi économique et facile à installer que possible.

Pour cela, l'invention fournit un véhicule selon la revendication 1.

Au sens de l'invention, une boucle est un contour fermé quelconque, dont la forme peut être simple, par exemple en anneau polygonal ou ovale, ou plus compliquée, par exemple en forme de huit, ou encore en forme torsadée à ventres multiples.

La zone de détection est située à l'intérieur de l'espace intérieur du véhicule, c'est-à-dire qu'elle comprend au moins une partie, habitable ou non, de l'espace intérieur du véhicule située à l'aplomb de la paroi longée par la boucle conductrice ou entre plusieurs parois longées par la boucle conductrice. Cette boucle conductrice qui longe une ou plusieurs parois permet d'engendrer un champ magnétique dont l'amplitude varie nettement entre la zone de détection et le reste de l'espace, notamment l'extérieur du véhicule, de manière à tenir compte de la position du dispositif récepteur portatif par rapport à ladite zone par une simple détection du niveau de champ reçu par le dispositif récepteur portatif.

De plus, la réalisation de l'antenne d'émission est facile, peu coûteuse et s'adapte facilement à la définition de zones de détection aux contours complexes.

Ladite ou chaque boucle conductrice ne forme qu'une seule spire. Ainsi, le coût et l'encombrement de l'antenne sont très faibles et son montage est facile. Selon une autre réalisation particulière de l'invention, ladite boucle conductrice est configurée de manière à entourer ladite zone de détection. Cette réalisation prend partie du fait que le champ magnétique engendré par la boucle conductrice présente un gradient important lors du franchissement de la boucle transversalement à l'axe d'enroulement de ladite boucle. De ce fait, cette réalisation permet d'obtenir un niveau de champ sensiblement différent entre l'espace intérieur, ou la portion de cet espace intérieur, qui est entouré(e) par la boucle, et le reste de l'espace, notamment l'extérieur du véhicule.

Selon un autre mode de réalisation, ladite boucle conductrice est intégralement formée par un câble conducteur. Cette réalisation est aussi avantageuse dans la mesure où le câble conducteur peut être conformé selon toute géométrie souhaitée, notamment pour entourer une ou plusieurs zones souhaitée(s) de l'espace intérieur. De plus, le coût d'un câble conducteur est particulièrement bas. Enfin, l'utilisation d'un seul câble par boucle évite l'emploi de connecteurs.

Avantageusement, ledit câble conducteur est logé dans lesdites parois du véhicule sur sensiblement toute la longueur dudit câble. On peut utiliser à cette fin tout élément creux de la structure du véhicule, notamment les gaines et les passages prévus pour les câbles d'alimentation électrique des différents organes ou le réseau de transfert de données interne du véhicule.

Avantageusement, le véhicule selon l'invention comporte plusieurs boucles conductrices entourant plusieurs zones distinctes dudit espace intérieur. Par exemple, une boucle entoure la totalité ou une partie de l'espace habitable du véhicule et une boucle entoure un espace de rangement comme le coffre du véhicule ou une autre partie de l'espace habitable. Avantageusement, une première boucle conductrice est disposée de manière à entourer l'habitacle et une deuxième boucle conductrice est disposée de manière à entourer l'espace du coffre. Selon une réalisation particulière, une troisième boucle conductrice est disposée de manière à entourer une portion latérale de l'habitacle.

De préférence, ledit dispositif de transmission embarqué comprend un sélecteur de boucle pour exciter sélectivement lesdites boucles conductrices. Par exemple, les différentes boucles conductrices peuvent être alimentées par l'intermédiaire d'une seule source de tension et de plusieurs relais distincts permettant de connecter sélectivement chacune des boucles conductrices à ladite source en fonction de la géométrie du champ à engendrer.

Selon un mode de réalisation particulier de l'invention, l'antenne d'émission est alimentée par l'intermédiaire d'un transformateur élévateur de tension, par exemple du type comportant un circuit magnétique à faible réluctance traversant respectivement un enroulement primaire et un enroulement secondaire alimentant ladite boucle conductrice.

Avantageusement, le rapport du nombre de spires dudit enroulement primaire sur le nombre de spires dudit enroulement secondaire est compris entre 5 et 200, de préférence entre 10 et 100. Un tel transformateur est en particulier bien adapté à l'obtention d'une alimentation de l'antenne avec une forte intensité, par exemple une ou quelques ampères, à partir des sources d'électricité habituelles du véhicule, comme une batterie de 12V délivrant par exemple une ou quelques centaines de milliampères.

Selon un autre mode de réalisation particulier de l'invention, la boucle conductrice est reliée à au moins un amplificateur de puissance. De préférence, la boucle conductrice comporte deux bornes reliées respectivement à deux amplificateurs de puissance fonctionnant en opposition de phase.

De préférence, le générateur des signaux est apte à engendrer un signal oscillant à une fréquence de l'ordre de 125 kHz.

Selon une autre réalisation particulière de l'invention, le dispositif de transmission de signaux est apte à émettre au moyen de ladite antenne d'émission plusieurs signaux successifs ayant des niveaux de puissance croissants, de manière à couvrir successivement des zones de détection ayant des tailles croissantes pour détecter la présence du dispositif récepteur portatif.

L'invention fournit aussi une utilisation du véhicule précité pour localiser un dispositif récepteur portatif, caractérisée par les étapes consistant à :

émettre au moins un signal radiofréquence sous la forme d'un champ magnétique avec au moins une boucle conductrice,

mesurer une amplitude dudit ou de chaque signal radiofréquence tel qu'il est reçu par ledit dispositif récepteur portatif,

déterminer une position absolue ou relative dudit dispositif récepteur portatif par rapport à ladite boucle conductrice en fonction de ladite amplitude.

Selon une réalisation particulière de l'invention, on détermine un éloignement absolu dudit dispositif récepteur portatif par rapport à ladite boucle conductrice à partir de ladite amplitude. En effet, lorsque les caractéristiques du signal émis sont connues, l'amplitude du signal reçu permet d'évaluer la distance de propagation.

De préférence, on émet au moins deux signaux radiofréquences respectifs avec au moins deux boucles conductrices respectives,
et on compare les amplitudes desdits au moins deux signaux radiofréquences tel qu'ils sont reçus par ledit dispositif récepteur portatif pour déterminer un éloignement relatif dudit dispositif récepteur portatif par rapport auxdites boucles conductrices. Par exemple, pour deux signaux émis avec une puissance égale, le dispositif récepteur portatif est plus proche de la boucle depuis laquelle il a reçu le signal ayant l'amplitude la plus élevée. En multipliant les boucles émettrices et les comparaisons logiques entre les amplitudes reçues, la localisation du dispositif récepteur peut être assez précisément déterminée, sans qu'une mesure d'éloignement absolu ne soit indispensable.

Avantageusement, on émet chaque signal radiofréquence avec une puissance d'émission fixe prédéterminée. Ainsi, le procédé de localisation peut être mis en oeuvre avec un dispositif de transmission à bas coût. Le coût total du système peut aussi être réduit en utilisant un dispositif récepteur à seuil de réception fixe.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :

- la figure 1 est une vue de dessus écorchée d'un véhicule selon un premier mode de réalisation de l'invention,
- la figure 2 est une représentation schématique d'un circuit d'alimentation de l'antenne d'émission des véhicules selon l'invention,
- la figure 3 représente les lignes du champ magnétique engendré par une spire simple parcourue par un courant électrique,
- la figure 4 représente de manière schématique la distribution de champ magnétique obtenue à l'aide de l'antenne du véhicule selon les différents modes de réalisation de l'invention,
- la figure 5 est une représentation schématique d'un autre circuit d'alimentation de l'antenne d'émission des véhicules selon l'invention,
- la figure 6 est une représentation schématique d'encore un autre circuit d'alimentation de l'antenne d'émission des véhicules selon l'invention,
- la figure 7 est une vue de dessus écorchée d'un véhicule selon un deuxième mode de réalisation de l'invention,
- la figure 8 est une vue analogue à la figure 7 représentant les zones de détection fournies par les boucles émettrices du véhicule,
- la figure 9 est une représentation schématique fonctionnelle d'un identifiant portatif,
- la figure 10 est une représentation schématique fonctionnelle de l'unité centrale du véhicule de la figure 7.

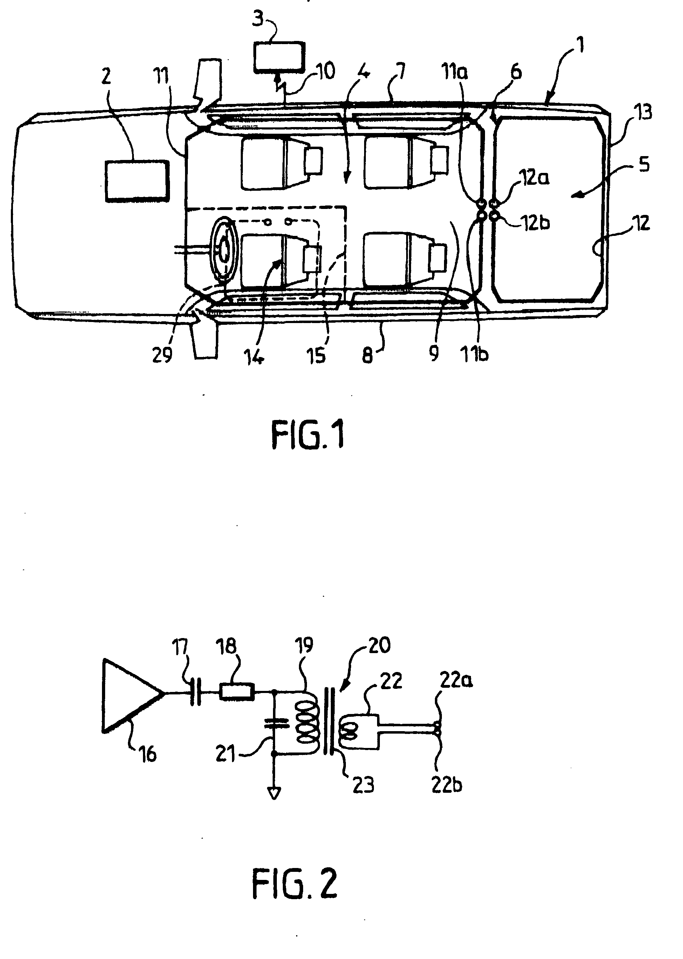

En référence à la figure 1, dans le premier mode de réalisation, le véhicule automobile 1 est représenté en vue de dessus, la paroi de toit étant omise pour laisser voir l'espace intérieur habitable 4. Cet espace intérieur habitable 4 est délimité par des parois latérales de carrosserie 7 et 8, dans lesquelles sont montées les portières avant et arrière, un tablier avant (non représenté) qui le sépare du moteur, une paroi arrière (non représentée) qui le sépare de l'espace intérieur du coffre 5, et une paroi de plancher 9.

Le véhicule 1 est équipé d'un système de commande mains libres comportant une unité centrale 2 embarquée dans le véhicule et un identifiant électronique 3 destiné à être porté par un utilisateur autorisé du véhicule pour mettre en oeuvre un procédé d'accès ou de démarrage main libre, selon la technique connue. Pour la liaison depuis l'unité centrale 2 vers l'identifiant 3, l'unité centrale 2 comporte un générateur de signaux électrique qui est relié, d'une manière qui sera précisée plus bas, à une antenne d'émission 6.

L'antenne d'émission 6 comporte deux câbles conducteurs 11 et 12, munis de gaines isolantes, disposés respectivement en forme d'anneaux simples autour de l'espace habitable 4 et de l'espace du coffre 5. Les câbles 11 et 12 sont disposés au niveau de la paroi de plancher 9 en utilisant, là où ils préexistent, les passage des torons d'alimentation des différents organes du véhicule 1, comme les feux arrière par exemple. Ces passages préexistant sont complétés, le cas échéant, pour permettre d'agencer les câbles 11 et 12 d'une manière entièrement invisible pour les occupants du véhicule, ce qui est préférable du point de vue de l'ergonomie et de l'aspect.

Le câble 11 comporte deux bornes 11a et 11b situées au milieu du côté transversal arrière de l'espace habitable 4. Entre celles-ci, le câble 11 longe la base des parois verticales délimitant l'espace habitable 4, à savoir la paroi latérale 7, le tablier avant, la paroi latérale 8 et la paroi de séparation avec le coffre 5. En variante, le câble 11 peut être disposé ailleurs que sur la paroi de plancher 9, par exemple au niveau de la paroi de toit du véhicule, tout en suivant le même contour. De manière similaire, le câble 12 comporte deux bornes 12a et 12b situées sensiblement au même endroit que les bornes 11a et 11b. Entre celles-ci, le câble 12 longe la base des parois verticales délimitant l'espace intérieur du coffre 5, à savoir la paroi de séparation avec l'espace habitable 4, une partie arrière des parois latérales 7 et 8 et la paroi arrière 13 de la carrosserie.

La figure 2 représente schématiquement le circuit d'alimentation de l'antenne 6. Ce circuit est intégré à l'unité centrale 2 et alimenté en énergie par la batterie du véhicule (non représentée). Il comporte un amplificateur 16 dont la sortie est relié à un condensateur 17 monté en série avec une résistance 18. Entre la résistance 18 et la masse sont montés en parallèle un enroulement 19 qui forme le circuit primaire d'un transformateur de courant 20 et un deuxième condensateur 21. Un circuit générateur de signal électrique (non représenté) est également intégré à l'unité centrale 2 et relié à l'entrée de l'amplificateur 16 pour produire le signal de données devant être émis.

Le transformateur de courant 20 comporte, en tant que circuit secondaire, un deuxième enroulement 22 dont les bornes 22a et 22b sont reliées respectivement aux bornes 11a et 11b du câble 11. Un noyau de ferrite 23 forme un circuit magnétique fermé de faible réluctance qui traverse les enroulements 19 et 22. L'enroulement 19 comporte un nombre N1 de spires et l'enroulement 22 comporte un nombre N2 de spires. Selon la technique connue, les nombres N1 et N2 sont choisis en fonction du rapport de tension ou d'intensité souhaité entre le circuit primaire et le circuit secondaire. Par exemple, l'intensité délivrée par l'amplificateur 16 est de l'ordre de 50 à 500 mA pour 5 à 12 V de tension crête et le rapport N1/N2 est choisi de l'ordre de 10 à 100, pour obtenir une intensité de l'ordre de 5 A dans le câble 11 lors de l'émission d'un signal vers l'identifiant 3. On peut choisir avantageusement N2=1. Le transformateur 20 est réalisé sous la forme d'un circuit imprimé.

L'alimentation du câble 12 est réalisé de manière similaire, soit en reliant également les bornes 12a et 12b aux bornes 22a et 22b respectivement, moyennant quoi les câbles 11 et 12 seront alimentés ensemble, soit en prévoyant un deuxième transformateur identique pour alimenter le câble 12 de manière indépendante du câble 11. Les câbles 11 et 12 peuvent aussi être reliés au transformateur 20 par deux relais (non représentés) permettant de connecter et de déconnecter indépendamment chacune d'elles selon la géométrie de champ émis souhaitée. Pour conduire le niveau d'intensité de l'ordre de 5 A, les câbles 11 et 12 peuvent être choisis de petit diamètre, par exemple entre 0,6 et 1 mm.

Les caractéristiques des condensateurs 17 et 21 et des enroulements 19 et 22 sont choisies de manière à régler la fréquence de résonance de l'antenne 6 reliée à son circuit d'alimentation en fonction de la valeur souhaitée, par exemple sensiblement 125kHz ou une autre fréquence autorisée. De plus, le coefficient de surtension de l'antenne 6 reliée à son circuit d'alimentation ne doit pas être trop élevé, par exemple inférieur ou égal à 10, pour permettre une bonne transmission des données. Ce coefficient de surtension peut être réglé par le choix de la valeur de la résistance 18. Cependant, la résistance 18 peut également être supprimée si la résistance intrinsèque de l'antenne 6 est suffisante.

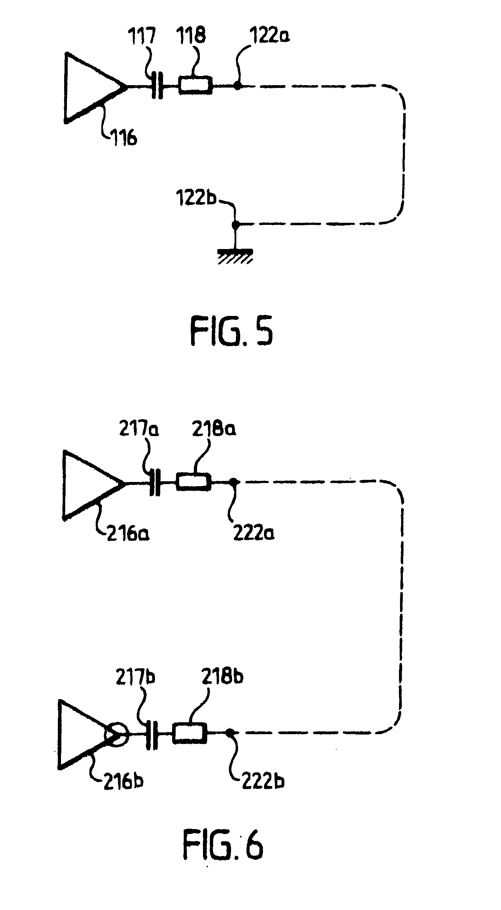

La figure 5 représente schématiquement une variante de circuit d'alimentation pour l'antenne 6. Ce circuit comporte un amplificateur de puissance 116 à la sortie duquel sont branchés en série une capacité 117, une résistance 118 et une borne 122a pouvant être reliée à la borne 11a du câble 11 pour l'alimenter. Ce circuit comporte aussi une borne de masse 122b pouvant être reliée à la borne 11b du câble 11.

La figure 6 représente schématiquement une autre variante de circuit d'alimentation pour l'antenne 6. Ce circuit comporte deux amplificateurs de puissance 116a et 116b fonctionnant en opposition de phase pour alimenter le câble 11 de manière symétrique. A la sortie de l'amplificateur 116a sont branchés en série une capacité 217a, une résistance 218a et une borne 222a pouvant être reliée à la borne 11a du câble 11. A la sortie de l'amplificateur 116b sont branchés en série une capacité 217b, une résistance 218b et une borne 222b pouvant être reliée à la borne 11b du câble 11. Ce montage symétrique présente l'avantage d'annuler le champ électrique parasite.

Les câbles 11 et 12 forment chacun une boucle conductrice pouvant être alimentée par l'un des circuits décrits ci-dessus, lesquels ne sont pas représentés sur la figure 1, pour engendrer un champ magnétique devant être reçu par l'identifiant 3.

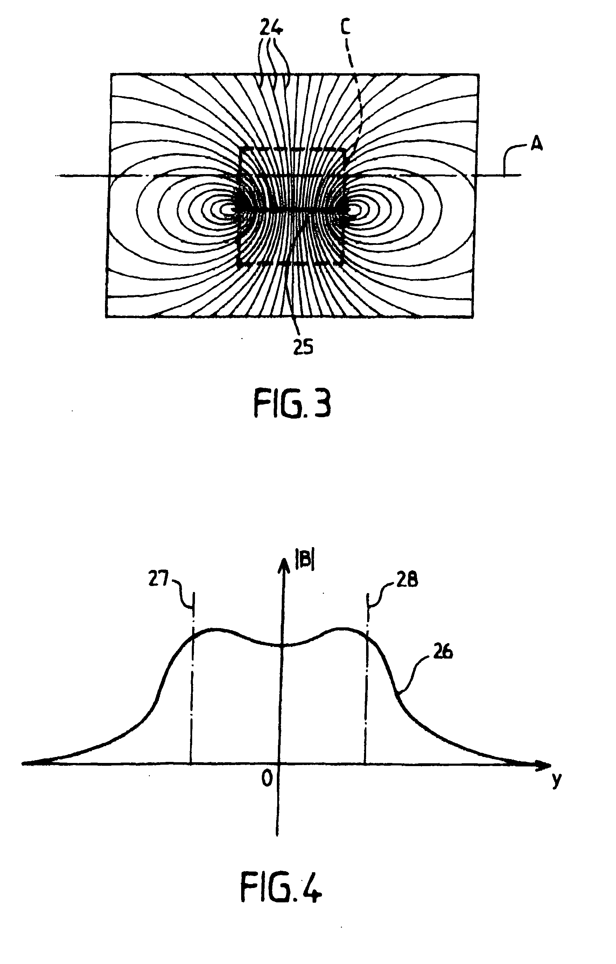

La figure 3 représente l'allure typique des lignes de champ magnétique 24 engendrées par une spire conductrice simple 25 parcourue par un courant électrique uniforme. La figure 3 correspond plus précisément au cas d'une spire 25 circulaire, de sorte que cette figure doit être comprise comme présentant une symétrie de révolution autour d'un axe vertical passant par le milieu de la spire 25. Bien que la boucle conductrice constituée par le câble 11 ou 12 ne soit pas exactement circulaire dans le mode de réalisation représenté à la figure 1, la figure 3 fournit une première approximation de la distribution du champ magnétique engendrée par une telle boucle conductrice à une seule spire. En particulier, comme l'indique la densité des lignes de champ, une telle boucle conductrice engendre un champ magnétique dont l'intensité est maximale à l'intérieur d'une zone globalement cylindrique C, délimitée en trait interrompu à la figure 3, dont l'axe est perpendiculaire au plan contenant la boucle et dont la courbe génératrice correspond sensiblement au contour de la boucle. Dans cette zone C, le champ magnétique est orienté sensiblement perpendiculairement au plan contenant la boucle.

Ainsi, si l'on considère le champ magnétique **B** émis par l'anneau du câble 11, et que l'on suit une ligne traversant l'espace 4 selon la direction transversale du véhicule, on observe une distribution de champ analogue, en première approximation, à la distribution de champ observée le long de la ligne A de la figure 3. Cette approximation est limitée par le fait qu'elle ne tient pas compte de l'environnement de l'antenne 6. Dans le véhicule 1, les partie métalliques du véhicule 1 influent sur la distribution des lignes de champ en confinant celles-ci davantage à l'intérieur de l'espace 4.

Au sens de l'invention, on considère que la boucle conductrice entoure une zone de détection lorsque ladite zone de détection est essentiellement incluse dans la zone C correspondant à ladite boucle conductrice. Lorsque la boucle conductrice en question est située au voisinage d'une paroi conductrice du véhicule, par exemple une paroi de plancher ou de plafond, la zone C correspondant à ladite boucle s'étend majoritairement du côté intérieur du véhicule par rapport à ladite paroi, car celle-ci fait un écran qui atténue le champ magnétique du côté extérieur du véhicule.

La distribution de champ obtenue à travers le véhicule 1 est représentée schématiquement par la courbe 26 sur la figure 4. Sur la figure 4, l'abscisse y représente le déplacement selon la direction transversale du véhicule 1, l'origine étant au milieu du véhicule. En ordonnée, on a représenté l'amplitude |B| du champ magnétique émis, à un instant donné. Les lignes en trait mixte 27 et 28 représentent respectivement l'emplacement des parois latérales 7 et 8. On constate que le champ magnétique présente une amplitude maximale et sensiblement uniforme dans l'espace 4, entre les parois latérales 7 et 8 et présente une décroissance raide à l'extérieur des parois latérales 7 et 8. La distribution de champ engendrée par le câble 12 est similaire. En outre, on obtiendrait un représentation similaire en représentant l'amplitude |B| du champ magnétique émis selon une ligne longitudinale du véhicule 1. Cette distribution du champ magnétique émis permet d'effectuer une discrimination entre l'intérieur et l'extérieur de chaque boucle conductrice en fonction de la seule amplitude |B| du champ émis.

L'amplitude du creux formé par la courbe 26 dans le milieu du véhicule croît avec la largeur, respectivement avec la longueur de la boucle 11. Si l'amplitude de ce creux est trop importante et empêche d'effectuer une discrimination satisfaisante entre l'intérieur et l'extérieur de la boucle 11 en fonction de l'amplitude |B| du champ émis, on peut utiliser une boucle 11 en forme de huit afin d'affiner le maillage de l'espace intérieur 4 du véhicule.

Le système de commande mains libres fonctionne de la manière suivante. Pour demander l'exécution d'une commande, par exemple demander l'accès au véhicule lorsque celui-ci est condamné ou demander le démarrage du véhicule, l'utilisateur portant l'identifiant 3 effectue une action d'initialisation, par exemple il actionne la poignée d'une portière avant, ce qui envoie un signal d'éveil à l'unité centrale 2, laquelle réagit à ce signal en émettant un premier signal radiofréquence depuis l'antenne 6, comme indiqué par la flèche 10 à la figure 1, par exemple par modulation d'amplitude d'une onde porteuse à 125kHz.

En fonction de sa position par rapport au véhicule, l'identifiant 3 reçoit un signal de plus ou moins forte amplitude. Lorsque l'identifiant 3 est à l'intérieur de l'espace habitable 4, il reçoit un signal d'amplitude maximale, qui est par exemple supérieure à 5 mV au niveau de l'antenne de réception de l'identifiant 3. Lorsque l'identifiant 3 est à l'extérieur de l'espace habitable 4, il reçoit un signal d'amplitude plus faible, qui est par exemple inférieure à 2 mV à 0,2 m de distance du véhicule 1. En outre, plus l'identifiant 3 est éloigné du véhicule, plus l'amplitude du signal reçu est faible.

Par la suite, on détermine si l'identifiant 3 se trouve à une position où l'exécution de la commande demandée est autorisée en détectant l'amplitude du signal reçu par l'identifiant 3 et en comparant cette amplitude à un seuil d'autorisation prédéterminé. Par exemple, ce seuil est fixé entre 2 et 5 mV au niveau de l'antenne de l'identifiant 3. Par exemple, l'identifiant 3 peut être muni d'un circuit logique permettant de mesurer l'amplitude du champ reçu. Lorsque cette mesure indique une amplitude supérieure au seuil d'autorisation, l'identifiant 3 décide de poursuivre le procédé de commande en envoyant un signal de réponse à l'unité centrale 2, selon la technique connue. Inversement, lorsque la mesure indique une amplitude inférieure au seuil d'autorisation, l'identifiant 3 décide d'interdire l'exécution de la commande et n'envoie aucun signal de réponse à l'unité centrale 2, ce qui met fin à l'exécution de la commande jusqu'à ce qu'un nouveau signal d'éveil soit produit par une action d'initialisation de l'utilisateur.

Selon une autre possibilité, l'identifiant 3 répond à l'unité centrale 2 à l'aide d'un signal contenant la valeur d'amplitude mesurée par l'identifiant 3. Dans ce cas, c'est l'unité centrale 2 qui décide de poursuivre ou non l'exécution de la commande en fonction de cette valeur d'amplitude.

Dans les deux cas ci-dessus, la mesure de l'amplitude du champ reçu indique explicitement la localisation de l'identifiant 3. Selon encore une autre possibilité, l'identifiant 3 n'est pas muni de moyens de mesure d'amplitude du champ reçu mais présente simplement un seuil de réception fixe, réglé de manière analogique, par exemple entre 2 et 5 mV. Dans ce cas, lorsque l'amplitude du champ au niveau de l'antenne de l'identifiant 3 est inférieure à ce seuil de réception, l'identifiant 3 ne reçoit pas le premier signal 10 et le procédé s'interrompt de fait. Inversement, lorsque l'amplitude du champ au niveau de l'antenne de l'identifiant 3 est supérieure ou égale à ce seuil, l'identifiant 3 reçoit le premier signal 10 et répond à l'unité centrale avec un signal d'authentification afin de poursuivre l'exécution de la commande, selon la technique connue. On obtient alors une indication implicite de la localisation de l'identifiant 3.

Dans ce dernier cas, l'unité centrale 2 est conçue de préférence de manière à pouvoir émettre le premier signal 10 à plusieurs reprises en réponse à l'action d'initialisation, avec un niveau de puissance qui croît à chaque itération jusqu'à ce que l'identifiant 3 reçoive le premier signal 10 ou qu'un niveau maximal de puissance soit atteint. Ainsi, l'unité centrale 2 commence par émettre une première fois le premier signal 10, avec un niveau de puissance minimal. Ce niveau minimal est réglé, en fonction du seuil de réception de l'identifiant 3, de manière que l'identifiant 3 ne puisse recevoir cette première occurrence du premier signal 10 qu'en se trouvant dans une zone de détection de petite taille, par exemple à moins de 20 cm à l'extérieur du véhicule.

Soit l'identifiant 3 reçoit le premier signal 10 et répond à l'unité centrale 2 avec un signal d'authentification afin de poursuivre l'exécution de la commande ; soit il ne le reçoit pas. Après un laps de temps suffisant pour permettre à l'identifiant 3 de répondre, l'unité centrale 2, lorsqu'elle n'a pas reçu le signal d'authentification, émet à nouveau le premier signal 10, avec un niveau de puissance accru, de manière que l'identifiant 3 puisse recevoir cette deuxième occurrence du premier signal en se trouvant dans une zone de détection de taille plus grande que la première fois, par exemple à moins de 50 cm du véhicule. Le procédé peut se répéter ainsi plusieurs fois, par exemple avec trois niveaux de puissance d'émission distincts ou plus. Selon l'occurrence du premier signal 10 à laquelle l'identifiant 3 répond, l'unité centrale peut déterminer dans quelle zone l'identifiant se trouve et décider de poursuivre ou non l'exécution de la commande. De préférence, la puissance d'émission maximale est déterminée de manière à couvrir exactement une zone de détection correspondant à la limite de sécurité au delà de laquelle aucune exécution de commande n'est autorisée.

On notera que le procédé d'émission susmentionné n'est limité ni à un type d'antenne particulier, ni à un type de récepteur particulier. Il est applicable à tout dispositif de transmission de signaux embarqué dans un véhicule, quelle que soit la conception des antennes d'émission.

La configuration des câbles 11 et 12 formant l'antenne 6 permet ainsi, moyennant un très faible coût d'équipement et d'installation, de tenir compte de la position de l'identifiant 3 par rapport au véhicule 1, notamment par rapport à l'espace habitable 4 et par rapport à l'espace du coffre 5, lorsque l'exécution d'une commande est demandée, afin d'autoriser ou d'interdire cette exécution. Par exemple, la position de l'identifiant 3 par rapport à l'espace habitable 4 et la position de l'identifiant 3 par rapport à l'espace du coffre 5 peuvent être évaluées de manière successive en alimentant successivement le câble 11 et le câble 12 dans le cadre du procédé décrit ci-dessus.

Grâce à la décroissance nette de l'amplitude du champ émis au niveau des parois du véhicule 1, la localisation de l'identifiant 3 par rapport aux zones de détection entourées par l'antenne 6 peut être obtenue, explicitement ou implicitement, avec une résolution spatiale d'environ 0,5 m.

D'autres configurations des câbles et un nombre plus important ou plus faible de câbles sont possibles. Dans une variante de réalisation, le câble 11 présente un contour modifié pour éviter d'entourer l'emplacement du siège du conducteur 14, comme représenté par le contour 15 en traits interrompus. Un troisième câble 29 est alors disposé uniquement autour du siège 14 afin de tenir compte de la position de l'identifiant 3 vis à vis de cette zone de manière spécifique, par exemple pour l'autorisation d'une commande de démarrage.

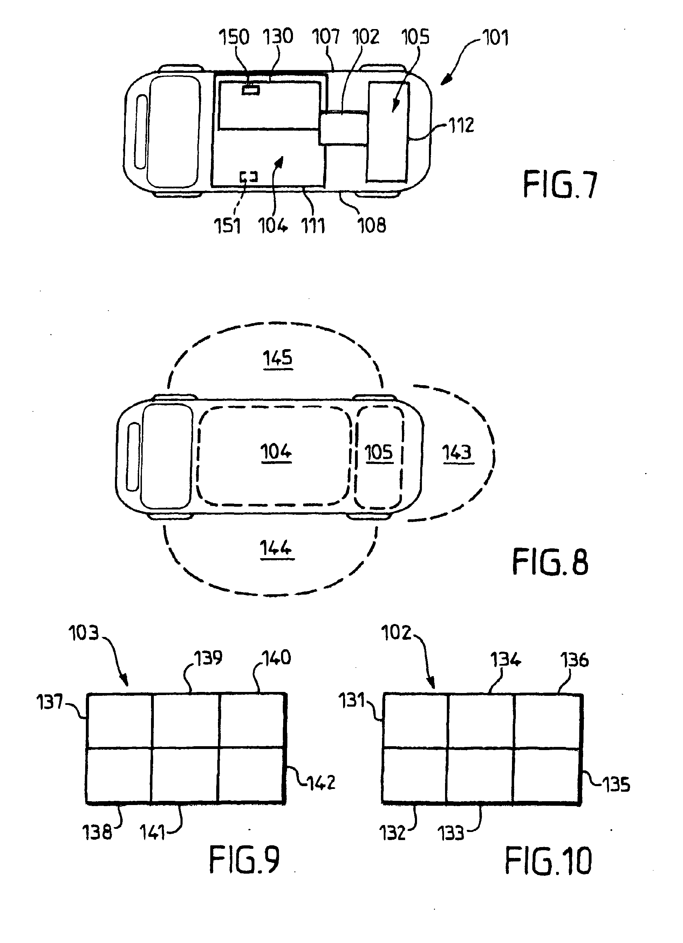

En référence aux figures 7 à 10, on décrit maintenant un deuxième mode de réalisation de l'invention. Les éléments analogues ou identiques au premier mode de réalisation ne sont pas décrits à nouveau et portent le même chiffre de référence augmenté de 100.

Dans le mode de réalisation de la figure 7, le véhicule 101 comporte trois boucles émettrices connectées à l'unité centrale 102. La boucle 11 entoure la plus grande partie de l'espace habitable 104, en passant sous la banquette arrière, devant les sièges avant et le long des parois latérales 107, 108. La boucle 112 entoure l'espace du coffre 105. La boucle 130 est disposée à l'intérieur de la boucle 111 et entoure la moitié latérale côté passager de l'espace habitable 104. En variante, cette boucle pourrait être disposée autour de l'autre moitié latérale. Les boucles 111, 112 et 130 sont disposées autant que possible dans les torons d'alimentation électrique des organes du véhicule 101. Ces boucles peuvent aussi être disposées entre la paroi de plancher et le tapis de sol.

En référence à la figure 10, l'unité centrale 102 comprend un module d'alimentation électrique 131 raccordé à la batterie du véhicule, un module pilote d'antenne 132 pour alimenter les boucles d'émission, un module sélecteur de boucle 133 pour sélectionner celle ou celles des boucles 11, 112 et 130 qui doit être alimentée lors de chaque transmission, et un module récepteur 135 pour recevoir un signal de réponse de l'identifiant 103. Une unité logique 134, par exemple un microcontrôleur, est programmée pour exécuter un programme de commande mains libres et commande les modules 132, 133 de manière correspondante. Une unité de bus 136 permet la communication entre l'unité logique 134 et les autres organes du véhicule, par exemple les actionneurs des serrures.

En référence à la figure 9, l'identifiant portatif 103 comporte un module d'antenne 137 incluant trois enroulements orientés de manière à être sensibles à trois composantes mutuellement perpendiculaires du champ magnétique, c'est-à-dire selon trois axes X, Y et Z, de manière à offrir une réception sensiblement isotrope. Le module d'antenne 137 alimente l'entrée analogique d'un module récepteur 138, lui-même relié à une unité logique 139, par exemple un microcontrôleur, munie d'un module de mémoire 140. L'identifiant portatif 103 comprend également un module d'alimentation électrique 141 raccordé à une batterie ou à un accumulateur rechargeable (non représentés) et un module émetteur 142 pour envoyer un signal de réponse radiofréquence au véhicule 101. L'unité logique 139 est aussi programmée pour exécuter le programme de commande mains libres.

Le système fonctionne de la manière suivante. Suite à l'action d'initialisation, l'unité centrale 102 émet successivement trois signaux d'interrogation à 125kHz avec une puissance prédéterminée : le signal A avec la boucle 111, puis le signal B avec la boucle 130 et enfin le signal C avec la boucle 112. La position des boucles émettrices est conçues pour couvrir plusieurs zones de transmission respectives, qui se chevauchent partiellement.

Chacun des signaux A, B et C comporte un code distinctif reconnaissable par l'unité logique 139 de l'identifiant 103. Pour chacun des signaux A, B et C, pour autant qu'il est reçu par l'identifiant 103, l'unité logique 139 mémorise les amplitudes qui sont reçues par les trois enroulement de l'unité d'antenne 137 dans le module de mémoire 140. Puis l'unité logique 139 calculé une amplitude normée du signal reçu, afin de s'affranchir de l'orientation de l'identifiant 103. Par exemple, après réception du signal A, les amplitudes $A_X$ $A_Y$ et $A_Z$ sont mémorisées et l'amplitude normée $N_A$ est :

$$N_A=[a.A_X^2+b.A_Y^2+c.A_Z^2]^{1/2},$$

où a, b et c sont des coefficients positifs fixés tenant compte de la sensibilité des différents enroulements.

Après réception d'au moins un des trois signaux, l'unité logique 139 attend pendant une durée fixée pour permettre l'émission des autres signaux puis elle effectue des tests logiques à partir des amplitudes normées $N_A$ , $N_B$ et $N_C$ calculées, éventuellement nulles en cas de non réception du signal correspondant, pour déterminer la localisation de l'identifiant 103. La figure 8 représente cinq zones parmi lesquelles la localisation de l'identifiant 103 peut être déterminée et le tableau 1 montre, pour chaque zone, les conditions logiques en réponse auxquelles l'unité logique 139 affecte l'identifiant 103 à ladite zone. 104 désigne l'espace habitable, 105 désigne l'espace du coffre, 143 désigne une zone extérieure arrière, 144 et 145 deux zones extérieures latérales, respectivement côté conducteur et côté passager. ε, $S_1$ et $S_2$ désignent des constantes de calibrage positives prédéterminées, qui ont mémorisées dans le module 140 lors de la fabrication.

De manière optionnelle, une antenne de référence à noyau de ferrite 150 peut être disposée à proximité du siège avant du passager ou une antenne de référence à noyau de ferrite 151 peut être disposée à proximité du siège avant du conducteur. Une telle antenne de référence présente une plus longue portée et permet, comme décrit précédemment, de mesurer l'éloignement absolu de l'identifiant 103 par rapport à l'antenne 150 ou 151 à partir de l'amplitude du signal reçu. Dans ce cas, des données de calibrage sont mémorisées dans le module 140 pour affecter un éloignement à une amplitude donnée. Une mesure d'éloignement absolu peut également être effectuée à partir des signaux A, B et C émis avec les boucles 111, 130 et 112.

Tableau 1

| Zone | Conditions logiques |
|------|---------------------|
| 104 | $N_A>S_1$ |
| 105 | $N_C>S_2$ |
| 143 | $N_C>N_A$ & $N_C>N_B$ |
| 144 | $N_A>N_B$ & $N_A>N_C$ |
| 145 | $|N_A-N_B|<ε$ & $N_B>N_C$ |

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Véhicule (1 ; 101) comportant un espace intérieur (4, 5 ; 104) délimité par des parois (7, 8, 9, 13 ; 107, 108) et un dispositif de transmission de signaux embarqué (2 ; 102) destiné à communiquer avec un dispositif récepteur portatif (3, 103) pour mettre en oeuvre un procédé de commande à distance, ledit dispositif de transmission de signaux étant muni d'une antenne d'émission (6), ladite antenne d'émission comprenant une ou plusieurs boucles conductrices fermées (11,12; 111,112,130) entourant une ou plusieurs zones distinctes dudit espace intérieur du véhicule pour engendrer un champ magnétique (B), ladite ou chaque boucle conductrice étant formée d'au moins un câble conducteur configuré de manière à longer au moins une desdites parois le long d'une zone de détection dans laquelle la présence du dispositif récepteur portatif doit être détectée, **caractérisé par le fait que** ladite ou chaque boucle conductrice ne forme qu'une seule spire et est alimentée par l'intermédiaire d'un transformateur élévateur de tension (20).

2. Véhicule selon la revendication 1, **caractérisé par le fait que** ladite ou chaque boucle conductrice est intégralement formée par un câble conducteur (11, 12).

3. Véhicule selon la revendication 2, **caractérisé par le fait que** ledit câble conducteur présente un diamètre entre 0,6 et 1 mm.

4. Véhicule selon l'une des revendications 1 à 3, **caractérisé par le fait que** ladite ou chaque boucle conductrice est logée dans lesdites parois du véhicule sur sensiblement toute sa longueur.

5. Véhicule selon l'une des revendications 1 à 4, **caractérisé par le fait qu'**il comporte plusieurs boucles conductrices (11, 12 ; 111, 112, 130) entourant plusieurs zones distinctes dudit espace intérieur (4, 5; 104, 105).

6. Véhicule selon la revendication 5, **caractérisé par le fait qu'**une première boucle conductrice (11, 111) est disposée de manière à entourer l'habitacle (4, 104) et une deuxième boucle conductrice (12, 112) est disposée de manière à entourer l'espace du coffre (5, 105).

**7.** Véhicule selon la revendication 6, **caractérisé par le fait qu'**une troisième boucle conductrice (130) est disposée de manière à entourer une portion latérale de l'habitacle.

**8.** Véhicule selon l'une des revendications 5 à 7, **caractérisé par le fait que** ledit dispositif de transmission embarqué (102) comprend un sélecteur de boucle (133) pour exciter sélectivement lesdites boucles conductrices (111, 112, 130).

**9.** Véhicule selon l'une des revendications 1 à 8, **caractérisé par le fait que** plusieurs boucles conductrices sont reliées au circuit secondaire dudit transformateur par des relais permettant de connecter et de déconnecter indépendamment chacune d'elles.

**10.** Véhicule selon l'une des revendications 1 à 9, **caractérisé par le fait que** ledit transformateur élévateur de tension comporte un circuit magnétique à faible réluctance traversant respectivement un enroulement primaire et un enroulement secondaire alimentant ladite boucle conductrice, le rapport du nombre de spires dudit enroulement primaire sur le nombre de spires dudit enroulement secondaire étant compris entre 10 et 100.

**11.** Véhicule selon l'une des revendications 1 à 10, **caractérisé par le fait que** ladite ou chaque boucle conductrice est reliée à au moins un amplificateur de puissance (16, 116, 216a).

**12.** Véhicule selon l'une des revendications 1 à 11, **caractérisé par le fait que** ledit dispositif de transmission de signaux est apte à émettre au moyen de ladite antenne d'émission plusieurs signaux successifs ayant des niveaux de puissance croissants, de manière à couvrir successivement des zones de détection ayant des tailles croissantes pour détecter la présence du dispositif récepteur portatif.

**13.** Utilisation d'un véhicule selon l'un des revendications 1 à 12 pour localiser un dispositif récepteur portatif, **caractérisée par** les étapes consistant à :

émettre au moins un signal radiofréquence sous la forme d'un champ magnétique avec au moins une boucle conductrice,
mesurer une amplitude dudit ou de chaque signal radiofréquence tel qu'il est reçu par ledit dispositif récepteur portatif,
déterminer une position absolue ou relative dudit dispositif récepteur portatif par rapport à ladite boucle conductrice en fonction de ladite amplitude.

**14.** Utilisation selon la revendication 13, **caractérisée par le fait qu'**on détermine un éloignement absolu dudit dispositif récepteur portatif par rapport à ladite boucle conductrice à partir de ladite amplitude.

**15.** Utilisation selon la revendication 13, **caractérisée par le fait qu'**on émet au moins deux signaux radiofréquences respectifs avec au moins deux boucles conductrices respectives,
et qu'on compare les amplitudes desdits au moins deux signaux radiofréquences tel qu'ils sont reçus par ledit dispositif récepteur portatif pour déterminer un éloignement relatif dudit dispositif récepteur portatif par rapport auxdites boucles conductrices.

**16.** Utilisation selon l'une des revendications 13 à 15, **caractérisée par le fait qu'**on émet chaque signal radiofréquence avec une puissance d'émission fixe prédéterminée.

**Claims**

**1.** Vehicle (1; 101) comprising an interior space (4, 5; 104) delimited by walls (7, 8, 9, 13; 107, 108) and an onboard signal transmission device (2; 102) designed to communicate with a portable receiver device (3; 103) to implement a remote control method, said signal transmission device being provided with a transmit antenna (6), said transmit antenna comprising one or more closed conductive loops (11, 12; 111, 112, 130) surrounding one or more separate areas of said interior space of the vehicle to generate a magnetic field (B), said or each conductive loop being formed by at least one conductive cable configured so as to follow at least one of said walls along a detection area in which the presence of the portable receiver device must be detected, **characterized in that** said or each conductive loop forms only a single turn and is powered via a voltage step-up transformer (20).

**2.** Vehicle according to Claim 1, **characterized in that** said or each conductive loop is entirely formed by a conductive cable (11, 12).

**3.** Vehicle according to Claim 2, **characterized in that** said conductive cable has a diameter between 0.6 and 1 mm.

**4.** Vehicle according to one of Claims 1 to 3, **characterized in that** said or each conductive loop is housed in said walls of the vehicle over roughly its entire length.

**5.** Vehicle according to one of Claims 1 to 4, **characterized in that** it comprises several conductive loops (11, 12; 111, 112, 130) surrounding several separate areas of said interior space (4, 5; 104, 105).

**6.** Vehicle according to Claim 5, **characterized in that** a first conductive loop (11, 111) is arranged so as to surround the passenger compartment (4, 104) and a second conductive loop (12, 112) is arranged so as to surround the space of the trunk (5, 105).

**7.** Vehicle according to Claim 6, **characterized in that** a third conductive loop (130) is arranged so as to surround a lateral portion of the passenger compartment.

**8.** Vehicle according to one of Claims 5 to 7, **characterized in that** said onboard transmission device (102) comprises a loop selector (133) to selectively excite said conductive loops (111, 112, 130).

**9.** Vehicle according to one of Claims 1 to 8, **characterized in that** several conductive loops are linked to the secondary circuit of said transformer by relays making it possible to independently connect and disconnect each of them.

**10.** Vehicle according to one of Claims 1 to 9, **characterized in that** said voltage step-up transformer comprises a low-reluctance magnetic circuit passing respectively through a primary winding and a secondary winding feeding said conductive loop, the ratio of the number of turns of said primary winding to the number of turns of said secondary winding being between 10 and 100.

**11.** Vehicle according to one of Claims 1 to 10, **characterized in that** said or each conductive loop is linked to at least one power amplifier (16, 116, 216a).

**12.** Vehicle according to one of Claims 1 to 11, **characterized in that** said signal transmission device is for transmitting by means of said transmit antenna several successive signals having increasing power levels, so as to successively cover detection areas having increasing sizes to detect the presence of the portable receiver device.

**13.** Use of a vehicle according to one of Claims 1 to 12 to locate a portable receiver device, **characterized by** steps consisting in:

transmitting at least one radiofrequency signal in the form of a magnetic field with at least one conductive loop, measuring an amplitude of said or each radiofrequency signal as it is received by said portable receiver device, determining an absolute or relative position of said portable receiver device relative to said conductive loop as a function of said amplitude.

**14.** Use according to Claim 13, **characterized in that** an absolute distance of said receiver device relative to said conductive loop is determined from said amplitude.

**15.** Use according to Claim 13, **characterized in that** at least two respective radiofrequency signals are transmitted with at least two respective conductive loops, and that the amplitudes of said at least two radiofrequency signals as received by said portable receiver device are compared to determine a relative distance of said portable receiver device from said conductive loops.

**16.** Use according to one of Claims 13 to 15, **characterized in that** each radiofrequency signal is transmitted with a predetermined fixed transmit power.

**Patentansprüche**

**1.** Fahrzeug (1;101) mit einem Innenraum (4 ,5; 104), der durch Wände (7, 8, 9, 13; 107, 108) begrenzt ist, und einer bordseitigen Signalübertragungsvorrichtung (2; 102), die zur Kommunikation mit einer tragbaren Empfangsvorrichtung (3, 103) dient, um ein Femsteuerungsverfahren durchzuführen, wobei die Signalübertragungsvorrichtung mit einer Sendeantenne (6) versehen ist, wobei die Sendeantenne eine oder mehrere geschlossene Leiterschleifen (11, 12; 111, 112, 130) zur Erzeugung eines Magnetfeldes (B) umfasst, die eine oder mehrere unterschiedliche Bereiche des Innenraums des Fahrzeugs umgeben, wobei die oder jede Leiterschleife aus wenigstens einem Leiterkabel besteht, das so angeordnet ist, dass es sich entlang wenigstens einer der Wände entlang eines Detektionsbereiches erstreckt, in welchem die Anwesenheit der tragbaren Empfangsvorrichtung detektiert werden soll, **dadurch gekennzeichnet, dass** die oder jede Leiterschleife nur eine Windung bildet und über einen Aufwärtstransformator (20) versorgt wird.

**2.** Fahrzeug gemäß Anspruch 1, **dadurch gekennzeichnet, dass** die oder jede Leiterschleife vollständig aus einem Leiterkabel (11,12) besteht.

**3.** Fahrzeug gemäß Anspruch 2, **dadurch gekennzeichnet, dass** das Leiterkabel einen Durchmesser zwischen 0,6 und 1 mm aufweist.

**4.** Fahrzeug gemäß einem der Ansprüche 1 bis 3, **dadurch gekennzeichnet, dass** die oder jede Leiterschleife auf im wesentlichen ihrer gesamten Länge in den Wänden des Fahrzeugs angeordnet ist.

**5.** Fahrzeug gemäß einem der Ansprüche 1 bis 4, **dadurch gekennzeichnet, dass** es mehrere Leiterschleifen (11, 12; 111; 112, 130) umfasst, welche mehrere unterschiedliche Bereiche des Innenraums (4, 5; 104, 105) umgeben.

6. Fahrzeug gemäß Anspruch 5, **dadurch gekennzeichnet, dass** eine erste Leiterschleife (11, 111) so angeordnet ist, dass sie den Fahrgastraum (4, 104) umgibt, und dass eine zweite Leiterschleife (12, 112) so angeordnet ist, dass sie den Kofferraum (5, 105) umgibt.

7. Fahrzeug gemäß Anspruch 6, **dadurch gekennzeichnet, dass** eine dritte Leiterschleife (130) so angeordnet ist, dass sie einen seitlichen Teil des Fahrgastraums umgibt.

8. Fahrzeug gemäß einem der Ansprüche 5 bis 7, **dadurch gekennzeichnet, dass** die bordseitige Übertragungsvorrichtung (102) einen Schleifenwähler (133) zur selektiven Anregung der Leiterschleifen (111, 112, 130) umfasst.

9. Fahrzeug gemäß einem der Ansprüche 1 bis 8, **dadurch gekennzeichnet, dass** mehrere Leiterschleifen mit dem Sekundärkreis des Transformators über Relais verbunden sind, welche ein voneinander unabhängiges Ein- und Ausschalten der Leiterschleifen ermöglichen.

10. Fahrzeug gemäß einem der Ansprüche 1 bis 9, **dadurch gekennzeichnet, dass** der Aufwärtstransformator einen magnetischen Kreislauf mit geringer Reluktanz aufweist, der jeweils eine Primärwicklung und eine die Leiterschleife versorgende Sekundärwicklung durchquert, wobei das Verhältnis der Windungszahl der Primärwicklung zur Windungszahl der Sekundärwicklung zwischen 10 und 100 liegt.

11. Fahrzeug gemäß einem der Ansprüche 1 bis 10, **dadurch gekennzeichnet, dass** die oder jede Leiterschleife mit wenigstens einem Leistungsverstärker (16, 116, 216a) verbunden ist.

12. Fahrzeug gemäß einem der Ansprüche 1 bis 11, **dadurch gekennzeichnet, dass** die Signalübertragungsvorrichtung so ausgelegt ist, dass sie über die Sendeantenne mehrere aufeinanderfolgende Signale mit zunehmender Leistung ausstrahlen kann, so dass nacheinander Detektionsbereiche mit zunehmender Größe abgedeckt werden, um die Anwesenheit der tragbaren Empfangsvorrichtung zu detektieren.

13. Verwendung eines Fahrzeugs gemäß einem der Ansprüche 1 bis 12 zum Lokalisieren einer tragbaren Empfangsvorrichtung, **gekennzeichnet durch** die Schritte bestehend aus:

Aussenden wenigstens eines Hochfrequenzsignals in Form eines Magnetfeldes mittels wenigstens einer Leiterschleife, Messen einer Amplitude des oder jedes Hochfrequenzsignals, wie es von der tragbaren Empfangsvorrichtung empfangen wird, Bestimmen einer absoluten oder relativen Position der tragbaren Empfangsvorrichtung bezüglich der Leiterschleife in Abhängigkeit von dieser Amplitude.

14. Verwendung gemäß Anspruch 13, **dadurch gekennzeichnet, dass** man auf der Grundlage dieser Amplitude eine absolute Entfernung der tragbaren Empfangsvorrichtung von der Leiterschleife bestimmt.

15. Verwendung gemäß Anspruch 13, **dadurch gekennzeichnet, dass** man jeweils wenigstens zwei Hochfrequenzsignale mit jeweils wenigstens zwei Leiterschleifen aussendet, und dass man die Amplituden der wenigstens zwei Hochfrequenzsignale, so wie sie von der tragbaren Empfangsvorrichtung empfangen werden, vergleicht, um eine relative Entfernung der tragbaren Empfangsvorrichtung von den Leiterschleifen zu bestimmen.

16. Verwendung gemäß einem der Ansprüche 13 bis 15, **dadurch gekennzeichnet, dass** man jedes Hochfrequenzsignal mit einer fest vorgegebenen Sendeleistung ausstrahlt.

FIG.1

FIG.2

FIG. 3

FIG.4

FIG. 5

FIG. 6

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4873530 A